# EUROPEAN PATENT APPLICATION

(11) **EP 4 173 887 A1**
(43) Date of publication of application: **03.05.2023**
(21) Application number: 22199096.3
(22) Date of filing: 30.09.2022
(51) Int. Cl.: B60N 2/00

(54) **DYNAMIC COMFORT DATA MAT SYSTEM**

(30) Priority: 27.10.2021 US 202117511963
(71) Applicant: Lear Corporation, Southfield, MI 48033 (US)
(72) Inventor: Zagorski, Wu Pan, Clawson, MI, 48107 (US); Pereny, Michelle A., Novi, MI, 48377 (US); Kazyak, David, Brighton, MI, 48114 (US)
(74) Representative: Grünecker Patent- und Rechtsanwälte PartG mbB

(57) **Abstract**

A mat system and method for collecting dynamic comfort data relative to a seat occupied by an occupant, the mat system including a sensor matrix layer configured to be disposed (i) extending along at least a portion of a top surface of a seat bottom and including a first shear force sensor mounted adjacent to the top surface of the seat bottom and configured to measure a first shear force generally parallel to the top surface of the seat bottom, or (ii) extending along a portion of a forward surface of a seat back including a second shear force sensor mounted adjacent to the forward surface of the seat back and configured to measure a second shear force generally parallel to the forward surface of the seat back, or (iii) both. The mat system may also include a temperature sensor, a normal force/pressure sensor or a vibration sensor.

## Description

### BACKGROUND OF THE INVENTION

This invention relates to a testing mat for a seat, and more particularly to a testing mat having a sensor matrix that is locatable on a seat to test for dynamic comfort.

When designing or re-designing seats, one may wish to test for comfort before finalizing a particular design. Accordingly, some conduct dynamic tests where a seat occupant provides subjective comfort evaluations for particular seat. To obtain more objective data, some have provided test mats on seats that provide feedback, such as pressure or vibration, during seat comfort drive tests. Such tests, however, may not provide sufficient real time information to provide a bridge between the objective data and subjective data when determining dynamic comfort of a seat.

### SUMMARY OF THE INVENTION

According to an aspect, the invention provides a mat system for collecting dynamic comfort data relative to a seat occupied by an occupant, the mat system including a sensor matrix layer configured to be disposed (i) extending along at least a portion of a top surface of a seat bottom and including a first shear force sensor mounted adjacent to the top surface of the seat bottom and configured to measure a first shear force generally parallel to the top surface of the seat bottom, or (ii) extending along a portion of a forward surface of a seat back including a second shear force sensor mounted adjacent to the forward surface of the seat back and configured to measure a second shear force generally parallel to the forward surface of the seat back, or (iii) both.

According to an aspect, the invention provides a mat system for collecting dynamic comfort data relative to a seat occupied by an occupant, the mat system including a sensor matrix layer configured to be disposed extending along at least a portion of a top surface of a seat bottom and comprising at least two types of sensors including (i) a shear force sensor mounted adjacent to the top surface of the seat bottom and configured to measure a first shear force generally parallel to the top surface of the seat bottom, (ii) a temperature sensor, and (iii) a vibration sensor.

According to an aspect, the invention provides a method for collecting dynamic comfort data relative to a seat occupied by an occupant, the method comprising: locating a sensor matrix layer of a mat system adjacent to a seat bottom or the seat bottom and a seat back, which sensor matrix layer comprises at least two types of sensors including (i) a shear force sensor mounted adjacent to the top surface of the seat bottom and configured to measure a first shear force generally parallel to the top surface of the seat bottom, (ii) a temperature sensor, and (iii) a vibration sensor; conducting a dynamic test that includes the seat, while the occupant occupies the seat; and receiving output from the at least two types of sensors during the dynamic test to collect the dynamic comfort data.

According to an aspect, the invention provides a mat system capable of providing multiple types of data relating to seat comfort simultaneously during a dynamic test, which allows for bridging a gap between subjective comfort data from a seat occupant and measured objective data. The mat system may provide for sensor readings from one or more different types of sensors such as temperatures sensor(s), pressure/normal force sensor(s), shear force sensor(s), vibration sensor(s), or various combinations of these sensors. The mat system may also provide for a flexible sensor matrix layer, which may be covered on one or both sides with flexible material panels, minimizing interference with a subjective seat comfort analysis by a seat occupant during a dynamic test.

Various aspects of this invention will become apparent to those skilled in the art from the following detailed description of the preferred embodiments, when read in light of the accompanying drawings.

According to an aspect, a mat system may be employed for dynamic comfort testing for a variety of types of seats. Such seats for which the mat system may be employed may include, for example, vehicle seats (e.g., automotive vehicles, airplanes, trains, trucks, ships) or other types of seats (e.g., motorized massaging seats, medical seats (e.g., for pressure ulcer preventions)).

### BRIEF DESCRIPTION OF THE DRAWINGS

Fig. 1 is a schematic, perspective view of a seat and mat system.
Fig. 2 is a schematic, perspective view of a seat and portion of a mat system.
Fig. 3 is a schematic, side view of a portion of a mat system.
Fig. 4 is a schematic view of a portion of a mat system.
Fig. 5 is a schematic view of a portion of a mat system.
Fig. 6 is a schematic view of a portion of a mat system.

### DETAILED DESCRIPTION OF THE PREFERRED EMBODIMENTS

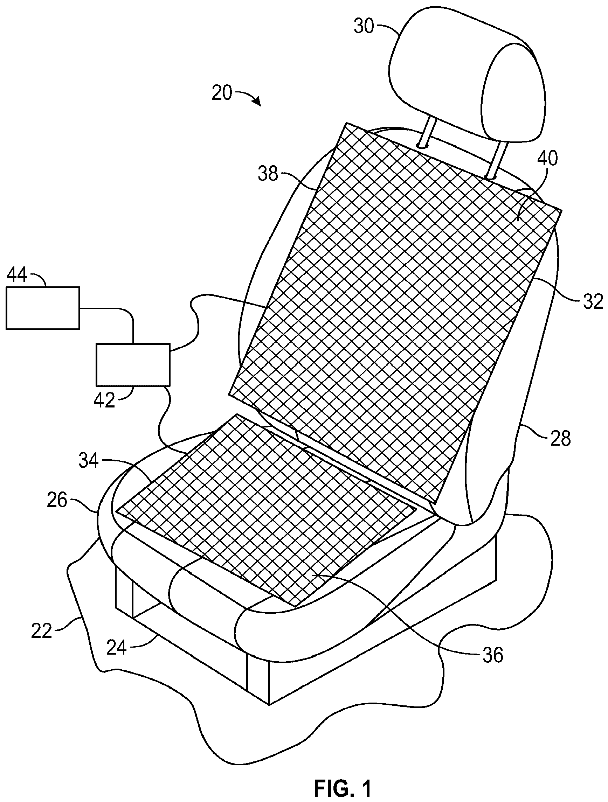

Referring now to the drawings, there is illustrated in Fig. 1 a seat 20, which may be a vehicle seat (e.g., automotive vehicles, airplanes, trains, trucks, ships) supported on a portion of a vehicle (or other support structure) 22 via a seat base 24, or may be a different type of seat (e.g., motorized massaging seats, medical seats (e.g., for pressure ulcer preventions). The seat 20 may include a seat bottom 26, which may be mounted to the seat base 24, a seat back 28, which may be mounted to the seat bottom 26, and optionally a headrest 30, which may be mounted to the seat back 28.

A mat system 32 may be disposed on the seat bottom 26, the seat back 28 or both. A seat bottom portion 34 of the mat system 32 may be disposed on the seat bottom 26 in an area where generally a seat occupant's buttock and thighs are located when occupying the seat 20. A material panel 36 may define a top surface of the seat bottom portion 34, which top surface of the material panel 36 defines a seat-occupant interface. A seat back portion 38 of the mat system 32 may be disposed on the seat back 28 in an area where generally a seat occupant's back is located when occupying the seat 20. A material panel 40 may define a front surface of the seat back portion 38, which front surface of the material panel 40 defines a seat-occupant interface. The seat bottom portion 34 and seat back portion 38 may operatively engage (e.g., wired or wirelessly in communication with) a data acquisition-storage device 42. The data acquisition device 42 may operatively engage (e.g., wired or wirelessly in communication with) electronics 44 (e.g., a laptop or other type of general purpose computer, a purpose built electronic device with a processor, input/output, memory, power source and software, or other similar type of electronic device incorporating electronic hardware and software).

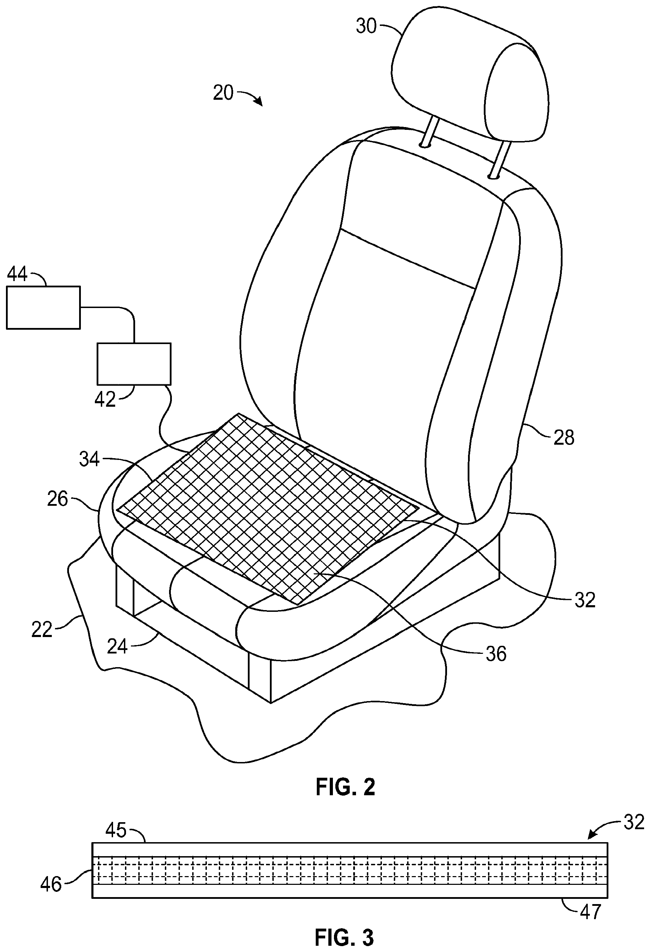

Referring now to Fig. 2, in view of Fig. 1, the seat 20 is shown. In this figure, the mat system 32 includes a seat bottom portion 34 but not a seat back portion. Since the elements in Fig. 2 can be essentially the same as those discussed in Fig. 1, the same element numbers will be used without repeating the description. While discussing Figs. 1 and 2 relative to Figs. 3-6, discussed below, the seat bottom portion 34 will be specifically discussed-although the discussion of the seat bottom portion 34 also generally applies to the seat back portion as well.

Referring now to Fig. 3, in view of Figs. 1 and 2, a portion of a mat system 32 (a seat bottom portion 34 or a seat back portion 38, as the case may be) is shown. The mat system 32 may comprise a sensor matrix layer 46, which may be sandwiched between material panels. The material panels may include a first panel 45 (e.g., material panels 36 or 40, as the case may be) that define a seat-occupant interface) and a second panel 47, which may be in surface contact with the seat bottom 26 or seat back 28, as the case may be. The panels 45, 47 may comprise a flexible material (e.g., a flexible fabric), which allows for deformation when the occupant sits in the seat 20.

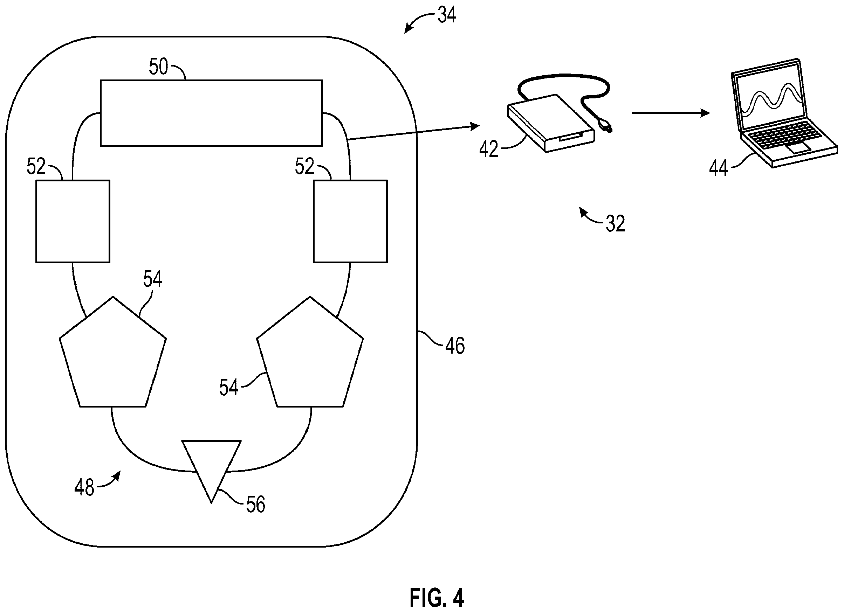

Referring now to Fig. 4, in view of Figs. 1-3, the sensor matrix layer 46 of a seat bottom portion 34 of the mat system 32 is illustrated. The sensor matrix layer 46 may include a sensor matrix 48, which may comprise discrete sensors spaced apart from one another that are integrated into the sensor matrix layer (and hence the mat). The sensor matrix 48 may comprise one or more temperature sensors 50, one or more pressure (normal force) sensors 52, one or more shear force sensors 54, one or more vibration sensors 56, or any combination and numbers of the various types of sensors. The pressure sensors 52 measure a normal force/pressure (i.e., acting downward in the direction of gravity for a seat bottom portion 34, and aft (relative to the seat) for a seat back portion 38). The shear force sensors 54 measure a force generally parallel to a top surface of the seat bottom 26 (i.e., generally horizontal in a fore-aft direction, side-to-side direction or both) for a seat bottom portion 34, and generally parallel to a front surface of the seat back 28 (i.e., generally in a vertical direction, side-to-side direction, or both, for a seat back portion 28). The various sensors in the sensor matrix 48 may be generally located in areas where an occupant's buttock and thighs may be located, between the thigh location or both (i.e., in locations where sensors will measure characteristics that may relate to occupant comfort for a seat bottom portion 34). The various sensors in the sensor matrix 48 may be generally located in areas where an occupant's back may be located (i.e., locations where sensors will measure characteristics that may relate to occupant comfort for a seat back portion 38). The sensor matrix 48 may operatively engage the data acquisition device 42 and electronics 44.

In operation, the mat system 32 is placed on a seat 20, which seat 20 is currently being dynamically tested for occupant comfort. The mat system 32 is portable and so can be used to test seat comfort for various types of seats. An occupant sits on the seat 20, with the mat system 32 active to receive sensor outputs. During dynamic testing, if in a vehicle, the occupant may ride in or drive the vehicle 22 while the sensors (e.g., 50/52/54/56) send output to the data acquisition device 42. For other types of seats, the occupant may occupy the seat while dynamic testing occurs (e.g., activating a massaging apparatus), while the sensors send output to the data acquisition device 42. The various sensors may send the data simultaneously to the data acquisition device 42. The acquisition of data during a portion, most or all of the dynamic test allows for the development of dynamic comfort data. Moreover, the dynamic testing where sensor data is collected may comprise many dynamic tests by one or more occupants when long term comfort data is desired. The data acquisition device 42 communicates with the electronics 44, which may then analyze the data output from the sensors. The occupant may generate subjective comfort data during or after the dynamic testing, which subjective data may be compared to the objective data produced by the analysis of the data received from the sensors. This comparison of the subjective data with the objective data may create a link between the two for future evaluation of dynamic seat comfort for a seat occupant. The sensor matrix layer 46 being integrated into the mat and being covered by the flexible material 36, 40 may allow for the occupant to generally feel the comfort of the seat, even though the mat system 32 is located on the seat 20 during the dynamic testing. This may provide for a better subjective comfort evaluation by a seat occupant than a rigid or stiff test mat.

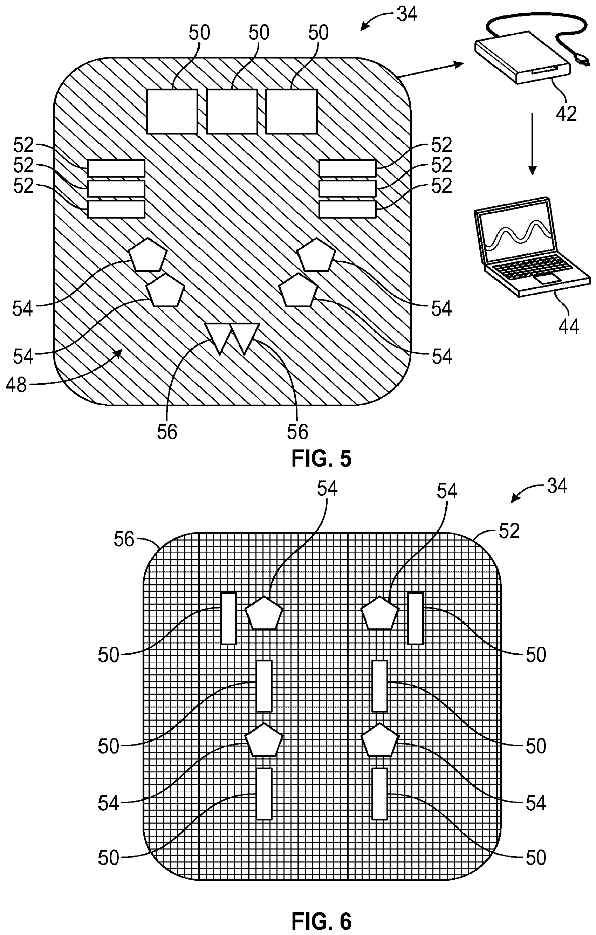

Referring now to Fig. 5, with reference to Figs. 1-3, the sensor matrix layer 46 of a seat bottom portion 34 of the mat system 32 is illustrated. The sensor matrix layer 46 may include a sensor matrix 48, which may comprise discrete sensors spaced apart from one another that are integrated into the sensor matrix layer (and hence the mat). The sensor matrix 48 may comprise one or more temperature sensors 50, one or more pressure (normal force) sensors 52, one or more shear force sensors 54, one or more vibration sensors 56, or any combination and numbers of the various types of sensors. The pressure sensors 52 may measure a normal force/pressure (i.e., acting downward in the direction of gravity for a seat bottom portion 34, and aft for a seat back portion 38). The shear force sensors 54 may measure a force generally parallel to a top surface of the seat bottom 26 (i.e., generally horizontal in a fore-aft direction, side-to-side direction, or both) for a seat bottom portion 34, and generally parallel to a front surface of the seat back 28 (i.e., in a generally vertical direction, side-to-side direction, or both, for a seat back portion 28). The various sensors in the sensor matrix 48 may be generally located in areas where an occupant's buttock and thighs may be located, between the thigh location or both (i.e., in locations where sensors will measure characteristics that may relate to occupant comfort for a seat bottom portion 34). The various sensors in the sensor matrix 48 may be generally located in areas where an occupant's back may be located (i.e., locations where sensors will measure characteristics that may relate to occupant comfort for a seat back portion 38). The sensor matrix 48 may operatively engage the data acquisition device 42 and electronics 44. Operation of the mat system of Fig. 5 may be similar to that of Fig. 4 and so will not be repeated.

Referring now to Fig. 6, with reference to Figs. 1-3, the sensor matrix layer 46 of a seat bottom portion 34 of the mat system 32 is illustrated. The sensor matrix layer 46 may include a sensor matrix 48, which may comprise some discrete sensors spaced apart from one another and other sensors that are integrated throughout the sensor matrix layer (and hence the mat). The sensor matrix 48 may comprise one or more discrete temperature sensors 50, one or more discrete vibration sensors 56, pressure (normal force) sensors 52 integrated throughout the matrix 48, shear force sensors 54 integrated throughout the matrix 48, or any combination and numbers of the various types of sensors. The pressure sensors 52 may measure a normal force/pressure (i.e., acting downward in the direction of gravity for a seat bottom portion 34, and aft for a seat back portion 38). The shear force sensors 54 may measure a force generally parallel to a top surface of the seat bottom 26 (i.e., generally horizontal in a fore-aft direction, side-to-side direction, or both) for a seat bottom portion 34, and generally parallel to a front surface of the seat back 28 (i.e., in a generally vertical direction, side-to-side direction, or both, for a seat back portion 28). The sensor matrix 48 may operatively engage the data acquisition device and electronics, such as those shown in Figs. 1,2, 4 and 5. Operation of the mat system of Fig. 6 may be similar to that of Fig. 4 and so will not be repeated.

The principle and mode of operation of this invention have been explained and illustrated in its preferred embodiment. However, it must be understood that this invention may be practiced otherwise than as specifically explained and illustrated without departing from its spirit or scope.

## Claims

1. A mat system for collecting dynamic comfort data relative to a seat occupied by an occupant, the mat system comprising:
a sensor matrix layer configured to be disposed (i) extending along at least a portion of a top surface of a seat bottom and including a first shear force sensor mounted adjacent to the top surface of the seat bottom and configured to measure a first shear force generally parallel to the top surface of the seat bottom, or (ii) extending along a portion of a forward surface of a seat back including a second shear force sensor mounted adjacent to the forward surface of the seat back and configured to measure a second shear force generally parallel to the forward surface of the seat back, or (iii) both (i) and (ii).

2. The mat system of claim 1 wherein the sensor matrix layer includes at least one temperature sensor.

3. The mat system of claim 1 wherein the sensor matrix layer includes at least one normal force or pressure sensor.

4. The mat system of claim 1 wherein the sensor matrix layer includes at least one vibration sensor.

5. The mat system of claim 1 wherein the sensor matrix layer further comprises at least two types of sensors including (i) a temperature sensor, (ii) a pressure or normal force sensor, and (iii) a vibration sensor.

6. The mat system of claim 5 wherein sensors in the sensor matrix layer are discrete sensors that are spaced apart.

7. The mat system of claim 1 wherein the sensor matrix layer comprises a flexible mat configured to generally flex when the occupant is occupying the seat.

8. The mat system of claim 7 further comprising a first flexible material panel covering a first side of the sensor matrix layer and a second flexible material panel covering an opposed second side of the sensor matrix layer.

9. The mat system of claim 1 further comprising a data acquisition device configured to receive data from at least one of the first and second shear force sensors.

10. The mat system of claim 1 wherein the sensor matrix layer further comprises (i) at least one temperature sensor, (ii) at least one pressure or normal force sensor, and (iii) at least one vibration sensor.

11. The mat system of claim 10 wherein at least one of (i) the shear force sensors and (ii) the pressure or normal force sensors are integrated throughout the sensor matrix layer, and the temperature sensors and the vibration sensors are discrete sensors that are spaced apart.

12. A mat system for collecting dynamic comfort data relative to a seat occupied by an occupant, the mat system comprising:
a sensor matrix layer configured to be disposed extending along at least a portion of a top surface of a seat bottom and comprising at least two types of sensors including (i) a shear force sensor mounted adjacent to the top surface of the seat bottom and configured to measure a first shear force generally parallel to the top surface of the seat bottom, (ii) a temperature sensor, and (iii) a vibration sensor.

13. The mat system of claim 12 wherein the sensor matrix layer further includes a pressure or normal force sensor.

14. The mat system of claim 12 wherein the sensor matrix layer is further configured to be disposed extending along a portion of a forward surface of a seat back and comprising at least two types of sensors adjacent to the forward surface of the seat back, including (i) a second shear force sensor mounted adjacent to the forward surface of the seat back and configured to measure a second shear force generally parallel to the forward surface of the seat back, (ii) a second temperature sensor, and (iii) a second vibration sensor.

15. The mat system of claim 14 wherein the sensor matrix layer further includes a pressure or normal force sensor adjacent to the seat back.

16. The mat system of claim 12 wherein the sensor matrix layer comprises a flexible mat configured to generally flex when the occupant is occupying the seat.

17. A method for collecting dynamic comfort data relative to a seat occupied by an occupant, the method comprising:
locating a sensor matrix layer of a mat system adjacent to a seat bottom or the seat bottom and a seat back, which sensor matrix layer comprises at least two types of sensors including (i) a shear force sensor mounted adjacent to the top surface of the seat bottom and configured to measure a first shear force generally parallel to the top surface of the seat bottom, (ii) a temperature sensor, and (iii) a vibration sensor;
conducting a dynamic test that includes the seat, while the occupant occupies the seat; and
receiving output from the at least two types of sensors during the dynamic test to collect the dynamic comfort data.

18. The method of claim 17 further comprising during the dynamic test, collecting pressure or normal force data from a pressure or normal force sensor located in the sensor matrix layer.

19. The method of claim 17 further comprising flexing the sensor matrix layer as the occupant occupies the seat.

20. The method of claim 17 further comprising simultaneously receiving output from at least three sensors, including the shear force sensor, the vibration sensor, the temperature sensor, and a pressure or normal force sensor.
